# EUROPEAN PATENT SPECIFICATION

(11) **EP 4 389 563 B1**
(45) Date of publication and mention of the grant of the patent: **26.03.2025**
(21) Application number: 22215770.3
(22) Date of filing: 22.12.2022
(51) Int. Cl.: B62D 5/097

(54) **MEASURING MOTOR AND HYDRAULIC STEERING UNIT**
MESSMOTOR UND HYDRAULISCHE LENKEINHEIT
MOTEUR DE MESURE ET UNITÉ DE DIRECTION HYDRAULIQUE

(43) Date of publication of application: 26.06.2024
(73) Proprietor: Danfoss Power Solutions ApS, 6430 Nordborg (DK)
(72) Inventor: Bruhn, Morten, 6430 Nordborg (DK)
(74) Representative: Keil & Schaafhausen Patentanwälte PartGmbB

(56) References cited:
- EP-A2- 1 659 289
- US-A1- 2014 105 775

## Description

The present invention relates to a measuring motor comprising a star member having a first number of outer teeth and an inner bore, a ring member having a second number of inner teeth, wherein the first number is smaller than the second number, a first plate and a second plate, wherein the star forms a first sealing zone with the first plate and a second sealing zone with the second plate, and the star member is arranged to rotate and orbit around an axis of the ring member and together with the ring member and the plates forms pressure chambers.

Furthermore, the invention relates to a hydraulic steering unit comprising such a measuring motor. Document EP1 659 289 A2 describes such a measuring motor and hydraulic steering unit and discloses the preamble of the independent claim.

A measuring motor is used to meter out the volume of a flow of fluid and to transform the volume of fluid passing the measuring motor into an angular displacement. In a hydraulic steering unit the measuring motor is connected to a valving means which usually comprises a spool and a sleeve which are rotatably arranged in a housing in which the measuring motor is also arranged. One of spool and sleeve is connected with a steering wheel and the other of spool and sleeve is connected to the star member of the measuring motor. When the steering wheel is rotated, spool and sleeve are rotated in relation to each other so that some orifices are opened, and other orifices are closed. Hydraulic fluid can then flow to the measuring motor driving the star member in relation to the ring member. The volume of fluid supplied to the measuring motor then flows to a steering motor, for example a steering cylinder. When the necessary amount of hydraulic fluid has been supplied to the steering motor, the star member has been rotated so far that the spool and the sleeve are restored back in their neutral position.

A problem arises that the sealing zones between the star member and the plates cannot be made tight. Thus, there is a leakage from all pressure chambers to the inner bore which is at a lower pressure than the pressure in the pressure chambers. Usually, the inner bore has a tank pressure. In a steering unit the pressure difference over the measuring motor is quite small and all pressure chambers use a relatively large pressure, so that leakage comes from the input side which is connected to the spool/sleeve set and from the output side connected to the steering motor.

The leakage on the output side which is connected to the steering motor will cause a drift of the steering wheel. The term "drift" means that cylinder and steering wheel or other steering input movement deviate from nominal. In other words, the direction indicated by the steering wheel and the direction of the steered wheel are not the same.

The object underlying the invention is to reduce misalignment between a steering member and steered wheels.

This object is solved with a measuring motor as described at the outset in that the star member comprises at least one ring groove in at least one of the first sealing zone and the second sealing zone, wherein the groove is connected to the inner bore via a leakage path and to at least one of the pressure chambers at a time via a connection arrangement.

As mentioned above, in a measuring motor the pressure difference over the measuring motor is usually rather low, i.e. in the magnitude of 10 bar or less. Thus, when the groove is connected to a pressure chamber via the connection arrangement, the pressure in the groove is approximately the same as the pressure in the pressure chamber connected to the groove via the connection arrangement. In this way it is possible to reduce the leakage around the measuring motor and to reduce the drift, i.e. the deviation between a steering wheel input and a wheel movement.

In an embodiment of the invention the connection arrangement comprises for each pressure chamber a connection. The connection is formed by one or more flow paths connecting the groove with the pressure chamber. The flow path may have a throttling resistance, so that the flow from the pressure chamber into the groove is kept low.

In an embodiment of the invention the star member opens and closes the connections upon rotation. Thus, the star member can be used for commutating the connections between the pressure chambers and the groove.

In an embodiment of the invention the measuring motor is connected to a commutating device supplying fluid to the pressure chambers in a controlled manner and the star member opens at least one connection of a pressure chamber which is supplied with fluid. Thus, the star member establishes a connection between one of the pressure chambers, for example, the pressure chamber having the highest pressure of all pressure chambers, and the groove. When the star member does not rotate, hydraulic fluid from this pressure chamber can then reach other pressure chambers having a lower pressure and can refill other pressure chambers which have lost hydraulic fluid due to a leakage. In particular, the pressure chamber or pressure chambers connected to a steering motor can be refilled to avoid the drift.

In an embodiment of the invention the star member opens a predetermined number of connections at a time and closes all other connections at the same time. Preferably, the star member opens only one connection at a time. Thus, only one chamber is connected to the groove at a time. However, it is also possible, that the star member opens more than one connections at a time.

In an embodiment of the invention the connection arrangement comprises for each pressure chamber a recess in one of the first plate and the second plate which plate is arranged on the side of the star member having the groove, wherein the groove is circular, and the recesses are arranged on a circle which is eccentric to the groove. The terms "circular" and "circle" are not meant in a mathematically exact sense. However, due to the orbiting movement of the star member in relation to the ring member such an arrangement is a simple way to make sure that one of the pressure chambers, for example, the pressure chamber having the highest pressure, is always connected to the groove and the other pressure chambers are not.

In an embodiment of the invention the circle is concentric with the ring member. This allows for a simple geometric relation.

In an embodiment of the invention the recess is elongated in a radial direction of the ring member. Thus, there is a tolerance range that facilitates the production of the measuring motor.

In an embodiment of the invention the recess is formed by at least two blind bores overlapping each other in radial direction of the ring member. This is a simple way to produce an elongated recess.

In an embodiment of the invention the leakage path rotates together with the star member. Thus, a connection between the groove and the inner bore is always available.

The object is solved with a hydraulic steering unit comprising a measuring motor as described above.

In an embodiment of the invention the steering unit comprises a steering valve, a supply port arrangement connected to the steering valve and a working port having a first working port connected to the steering valve by means of a first working line and a second working port connected to the steering valve by means of a second working line, wherein the measuring motor is arranged in one of the working lines. This has the advantage that the measuring motor is always placed in the same connection to the working ports.

The invention will now be described with reference to the drawing, wherein:
- Fig. 1: is a schematic illustration of a hydraulic steering unit,
- Fig. 2: is a schematic illustration of a measuring motor in a side view,
- Fig. 3: shows a star of the measuring motor,
- Fig. 4: shows a diagram illustrating leakages in a measuring motor according to the prior art, and
- Fig. 5: shows a diagram illustrating the flow of fluid in the present measuring motor.

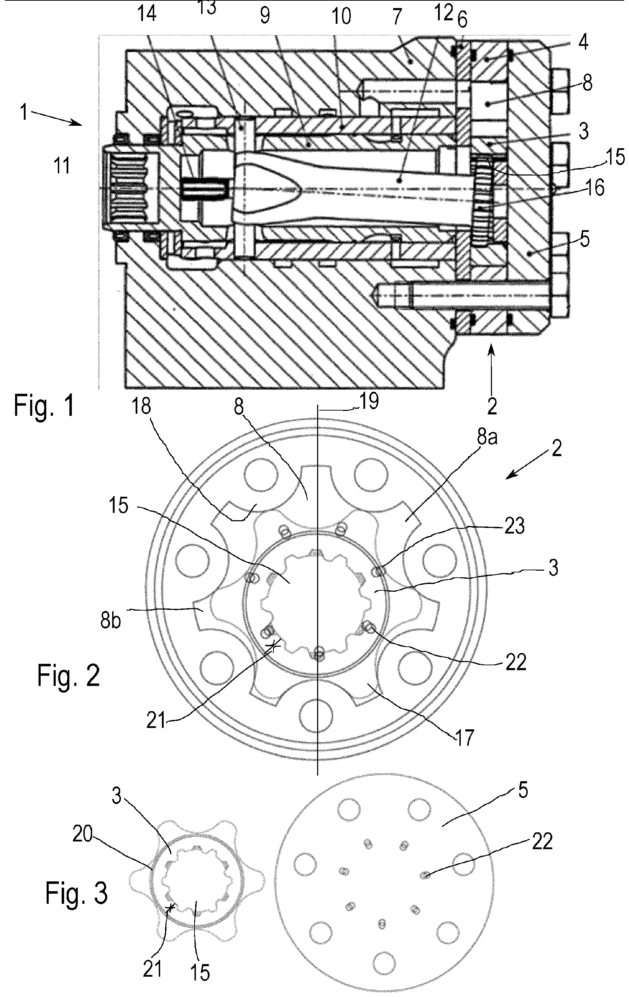

Fig. 1 shows schematically a hydraulic steering unit 1 in a cross-sectional view. The hydraulic steering unit comprises a measuring motor 2. The measuring motor 2 comprises a star member 3 and a ring member 4 which will be described in more detail with reference to Fig. 2 and 3. The star member 3 and the ring member 4 are arranged between a first plate 5 and a second plate 6. The first plate 5 and the second plate 6 are connected with a housing 7 of the steering unit 1.

Pressure chambers 8 are formed between the star member 3, the ring member 4 and the two plates 5, 6.

The hydraulic steering unit 1 furthermore comprises a spool 9 and a sleeve 10. The sleeve 10 is rotatably arranged in the housing 7 and the spool 9 can be rotated with respect to the sleeve 10. The spool 9 can be connected via a connection geometry 11 to a steering wheel. The sleeve 10 is connected by means of a dog bone 12 to the star member 3. The dog bone 12 is connected to the sleeve 10 by means of a bolt 13. Furthermore, a torsion spring 14 is arranged between the connection geometry 11 and the dog bone 12.

The star member 3 comprises an inner bore 15 having an engagement geometry into which a corresponding engagement geometry 16 of the dog bone engages. Thus, a rotation of the star member 3 is transformed into a rotational movement of the spool 10.

Such a construction is known per se.

A first sealing zone is formed between a face of the star member 3 and the first plate 5 and a second sealing zone is formed between the opposite face of the star member 3 and the second plate 6.

Fig. 2 shows a sectional view through the measuring motor 2. The star member 3 comprises a first number of outer teeth 17 and the ring member 4 comprises a second number of inner teeth 18. The second number is one greater than the first number. The pressure chambers 8 are formed between the star member 3 and the ring member 4, as mentioned above.

When a steering wheel connected to the connection geometry 11 is rotated, this rotational movement causes a rotation of the spool 9 in relation to the sleeve 10.

Spool 9 and sleeve 10 form a valve arrangement comprising a number of orifices. When the spool 9 is rotated in relation to the sleeve 10 some orifices are opened, and other orifices may be closed. The flow of hydraulic fluid can flow from a pressure port (not shown) to a pressure chamber 8 having an increasing volume. In Fig. 2 this is, for example, pressure chamber 8a. Hydraulic fluid of a pressure chamber 8b having a decreasing volume is supplied to a steering motor (not shown). A line 19 shows schematically a separation between an input side having pressure chambers 8 with an increasing volume and pressure chambers 8 having a decreasing volume. This line 19 rotates during operation of the hydraulic steering unit 1.

The rotation of the star member 3 causes a corresponding rotation of the sleeve 10, so that the sleeve 10 is restored to a neutral position in relation to spool 9 once the required amount of hydraulic fluid has been supplied to the steering motor.

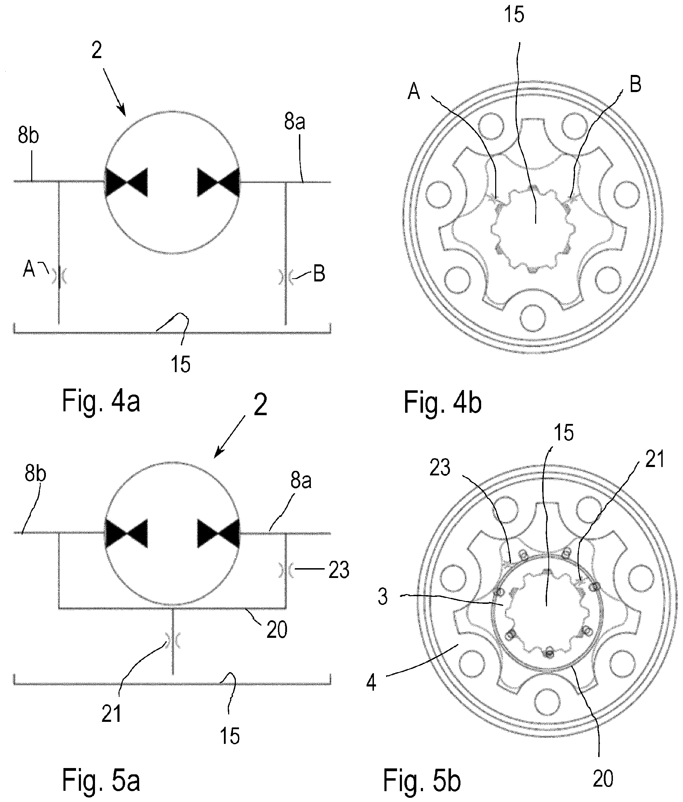

A leakage in the sealing zones between the star member 3 and the plates 5, 6 is unavoidable in practice. This is schematically shown in Fig. 4a wherein the inner bore 15 is schematically shown as a tank. Both sides of the measuring motor 2 are connected to the inner bore 15 via two leakage paths shown as orifices A, B which are schematically shown also in Fig. 4b. This is the situation in the prior art steering units. Such a situation has the risk that the leakage from the output side which is connected to the measuring motor leads to a drift of the steering wheel, so that the steering wheel moves without a corresponding movement of the steered wheels.

To avoid such a situation or at least reduce this risk, the star member 3 is provided with a groove 20 in at least one of the sealing zones, in the present embodiment on the side facing the first plate 5. This groove 20 is connected to the inner bore 15 via a leakage path 21 schematically shown as orifice.

Furthermore, the first plate 5 comprises a number of elongated recesses 22 which can be formed, for example, by means of two or more blind bores overlapping in a radial direction of the first plate 5. The recesses 22 are arranged on a circle which has the same center as the first plate 5. The groove 20 is also of circular form and has the same center as the star member 3.

When the star member 3 rotates, it performs at the same time an orbiting movement in relation to the ring member 4. Thus, the elongated recesses 22 form an connection arrangement having a number of conncections 23 which corresponds to the number of pressure chambers 8. However, the orbiting movement of the star member 3 in relation to the ring member 4 has the consequence that at a time only one connection 23 connected to one of the pressure chambers, for example a pressure chamber 8a having an increasing volume, is connected to the groove 20 while all other connections 23 are closed. Thus, for ecxample, the groove 20 is connected to the pressure chamber 8a having the highest pressure. It is, however, also possible that more than only one pressure chamber 8 is connected to the groove 20 at a time. Furthermore, depending on the operating conditions of the measuring motor, it is not always the pressure chamber 8 having the highest pressure which is connected to the groove 20.

The function of this construction is schematically illustrated in connection with Fig. 5. Fig. 5a is a schematic diagram showing the positions of the leakage path 21 and the connection 23 and Fig. 5b shows these elements in a view similar to Fig. 2.

For example, a pressure in the pressure chamber 8a having an increasing volume is present in the groove 20. Since the pressure difference between the input side (pressure chamber 8a) and the output side (pressure chamber 8b) is quite small, only a small flow of fluid can pass the connection 23. Fluid in the groove 20 can escape to the inner bore 15 via the leakage path 21. However, the leakage path 21 usually has a larger throttling resistance than the connection 23. Thus, it is possible that the hydraulic fluid on the input side (pressure chamber 8a) refills the pressure chambers 8b on the output side, so that there is no further discrepancy between the angular position of a steering wheel and an angular position of the steered wheels.

The leakage path 21 rotates with the star member 3 and a connection between the groove 20 and the inner bore 15 is always established via the leakage path 21.

In the present embodiment the recesses 22 are elongated in radial direction. This is, however, only an option having the advantage that the time of opening and closing of the connection 23 can be controlled precisely.

The measuring motor of the kind described can preferably be used in a steering unit that comprises a steering valve, a supply port arrangement connected to the steering valve and a working port having a first working port connected to the steering valve by means of a first working line and a second working port connected to the steering valve by means of a second working line, wherein the measuring motor is arranged in one of the working lines. A steering unit in which the measuring motor is placed in one of the working lines is known, for example, from EP 3 078 571 B1.

The use in such a construction has the advantage that the measuring motor is always placed in the same position with respect to the working ports and to a steering motor connected to the working ports.

## Claims

1. Measuring motor (2) comprising a star member (3) having a first number of outer teeth (17) and an inner bore (15), a ring member (4) having a second number of inner teeth (18), wherein the first number is smaller than the second number, a first plate (5) and a second plate (6), wherein the star member (3) forms a first sealing zone with the first plate (5) and a second sealing zone with the second plate (6), and the star member (3) is arranged to rotate and orbit around an axis of the ring member (4) and together with the ring member (4) and the plates (5, 6) forms pressure chambers (8), **characterized in that** the star member (3) comprises at least one ring groove (20) in at least one of the first sealing zone and the second sealing zone, wherein the groove (20) is connected to the inner bore (15) via a leakage path (21) and to at least one of the pressure chambers (8) at a time via a connection arrangement.

2. Measuring motor according to claim 1, **characterized in that** the connection arrangement comprises for each pressure chamber (8) a connection (23).

3. Measuring motor according to claim 2, **characterized in that** the star member (3) opens and closes the connections (23) upon rotation.

4. Measuring motor according to claim 3, **characterized in that** it is connected to a commutating device (9, 10) supplying fluid to the pressure chambers (8) in a controlled manner and the star member (3) opens at least a connection (23) of a pressure chamber (8) which is supplied with fluid.

5. Measuring motor according to any of claims 2 to 4, **characterized in that** the star member (3) opens a predetermined number of connections (23) at a time and closes all other connections (23) at the same time.

6. Measuring motor according to any of claims 1 to 5, **characterized in that** the orifice arrangement comprises for each pressure chamber (8) a recess (22) in one of the first plate (5) and second plate (6) which plate (5, 6) is arranged on the side of the star member (3) having the groove (20), wherein the groove (20) is circular and the recesses (22) are arranged on a circle which is eccentric to the groove (20).

7. Measuring motor according to claim 6, **characterized in that** the circle is concentric with the ring member (4).

8. Measuring motor according to claim 6 or 7, **characterized in that** the recess (22) is elongated in a radial direction of the ring member (4).

9. Measuring motor according to claim 8, **characterized in that** the recess (22) is formed by at least two blind bores overlapping each other in radial direction of the ring member (4).

10. Measuring motor according to any of claims 1 to 9, **characterized in that** the lekage path (21) rotates together with the star member (3).

11. Hydraulic steering unit (1) comprising a measuring motor (2) according to any of claims 1 to 10.

12. Hydraulic steering unit (1) according to claim 11, **characterized in that** it comprises a steering valve, a supply port arrangement connected to the steering valve and a working port having a first working port connected to the steering valve by means of a first working line and a second working port connected to the steering valve by means of a second working line, wherein the measuring motor is arranged in one of the working lines.

## Patentansprüche

1. Messmotor (2), umfassend ein Sternelement (3) mit einer ersten Anzahl von Außenzähnen (17) und einer Innenbohrung (15), ein Ringelement (4) mit einer zweiten Anzahl von Innenzähnen (18), wobei die erste Anzahl kleiner als die zweite Anzahl ist, eine erste Platte (5) und eine zweite Platte (6), wobei das Sternelement (3) mit der ersten Platte (5) eine erste Dichtzone und mit der zweiten Platte (6) eine zweite Dichtzone bildet, und das Sternelement (3) so angeordnet ist, dass es um eine Achse des Ringelements (4) rotiert und kreist und zusammen mit dem Ringelement (4) und den Platten (5, 6) Druckkammern (8) bildet, **dadurch gekennzeichnet, dass** das Sternelement (3) mindestens eine Ringnut (20) in mindestens einer der ersten Dichtungszone und der zweiten Dichtungszone umfasst, wobei die Nut (20) über einen Leckagepfad (21) mit der Innenbohrung (15) und mit mindestens einer der Druckkammern (8) zu einer Zeit über eine Verbindungsanordnung verbunden ist.

2. Messmotor nach Anspruch 1, **dadurch gekennzeichnet, dass** die Verbindungsanordnung für jede Druckkammer (8) eine Verbindung (23) umfasst.

3. Messmotor nach Anspruch 2, **dadurch gekennzeichnet, dass** das Sternelement (3) die Verbindungen (23) bei Drehung öffnet und schließt.

4. Messmotor nach Anspruch 3, **dadurch gekennzeichnet, dass** er mit einer Kommutierungsvorrichtung (9, 10) verbunden ist, die den Druckkammern (8) in kontrollierter Weise Fluid zuführt, und das Sternelement (3) mindestens eine Verbindung (23) zu einer Druckkammer (8) öffnet, die mit Fluid versorgt ist.

5. Messmotor nach einem der Ansprüche 2 bis 4, **dadurch gekennzeichnet, dass** das Sternelement (3) eine vorbestimmte Anzahl an Verbindungen (23) zu einer Zeit öffnet und alle anderen Verbindungen (23) zur gleichen Zeit schließt.

6. Messmotor nach einem der Ansprüche 1 bis 5, **dadurch gekennzeichnet, dass** die Öffnungsanordnung für jede Druckkammer (8) eine Ausnehmung (22) in einer der ersten Platte (5) und zweiten Platte (6) umfasst, welche Platte (5, 6) auf der Seite des Sternelements (3) mit der Nut (20) angeordnet ist, wobei die Nut (20) kreisförmig ist und die Ausnehmungen (22) auf einem Kreis angeordnet sind, der exzentrisch zur Nut (20) ist.

7. Messmotor nach Anspruch 6, **dadurch gekennzeichnet, dass** der Kreis konzentrisch zum Ringelement (4) ist.

8. Messmotor nach Anspruch 6 oder 7, **dadurch gekennzeichnet, dass** die Ausnehmung (22) in einer radialen Richtung des Ringelements (4) langgestreckt ist.

9. Messmotor nach Anspruch 8, **dadurch gekennzeichnet, dass** die Ausnehmung (22) durch mindestens zwei Sackbohrungen gebildet wird, die sich in radialer Richtung des Ringelements (4) überschneiden.

10. Messmotor nach einem der Ansprüche 1 bis 9, **dadurch gekennzeichnet, dass** der Leckagepfad (21) zusammen mit dem Sternelement (3) rotiert.

11. Hydraulische Lenkeinheit (1) umfassend einen Messmotor (2) nach einem der Ansprüche 1 bis 10.

12. Hydraulische Lenkeinheit (1) nach Anspruch 11, **dadurch gekennzeichnet, dass** sie ein Lenkventil, eine Versorgungsanschlussanordnung, die mit dem Lenkventil verbunden ist, und einen Arbeitsanschluss, der einen ersten Arbeitsanschluss, der über eine erste Arbeitsleitung mit dem Lenkventil verbunden ist, und einen zweiten Arbeitsanschluss, der über eine zweite Arbeitsleitung mit dem Lenkventil verbunden ist, umfasst, wobei der Messmotor in einer der Arbeitsleitungen angeordnet ist.

## Revendications

1. Moteur de mesure (2) comprenant un élément en étoile (3) ayant un premier nombre de dents externes (17) et un alésage interne (15), un élément annulaire (4) ayant un second nombre de dents internes (18), où le premier nombre est inférieur au second nombre, une première plaque (5) et une seconde plaque (6), où l'élément en étoile (3) forme une première zone d'étanchéité avec la première plaque (5) et une seconde zone d'étanchéité avec la seconde plaque (6), et l'élément en étoile (3) est agencé pour tourner et orbiter autour d'un axe de l'élément annulaire (4) et forme conjointement avec l'élément annulaire (4) et les plaques (5, 6) des chambres de pression (8), **caractérisé en ce que** l'élément en étoile (3) comprend au moins une rainure annulaire (20) dans au moins l'une de la première zone d'étanchéité et de la seconde zone d'étanchéité, où la rainure (20) est reliée à l'alésage interne (15) par l'intermédiaire d'un trajet de fuite (21) et à au moins l'une des chambres de pression (8) à la fois par l'intermédiaire d'un agencement de liaison.

2. Moteur de mesure selon la revendication 1, **caractérisé en ce que** l'agencement de liaison comprend pour chaque chambre de pression (8) une liaison (23).

3. Moteur de mesure selon la revendication 2, **caractérisé en ce que** l'élément en étoile (3) ouvre et ferme les liaisons (23) lors de la rotation.

4. Moteur de mesure selon la revendication 3, **caractérisé en ce qu'**il est relié à un dispositif de commutation (9, 10) fournissant un fluide aux chambres de pression (8) de manière contrôlée et l'élément en étoile (3) ouvre au moins une liaison (23) d'une chambre de pression (8) qui est alimentée en fluide.

5. Moteur de mesure selon l'une des revendications 2 à 4, **caractérisé en ce que** l'élément en étoile (3) ouvre un nombre prédéterminé de liaisons (23) à la fois et ferme toutes les autres liaisons (23) en même temps.

6. Moteur de mesure selon l'une des revendications 1 à 5, **caractérisé en ce que** l'agencement d'orifice comprend pour chaque chambre de pression (8) un évidement (22) dans l'une de la première plaque (5) et de la seconde plaque (6), laquelle plaque (5, 6) est agencée sur le côté de l'élément en étoile (3) ayant la rainure (20), où la rainure (20) est circulaire et les évidements (22) sont agencés sur un cercle qui est excentrique par rapport à la rainure (20).

7. Moteur de mesure selon la revendication 6, **caractérisé en ce que** le cercle est concentrique avec l'élément annulaire (4).

8. Moteur de mesure selon la revendication 6 ou 7, **caractérisé en ce que** l'évidement (22) est allongé dans une direction radiale de l'élément annulaire (4).

9. Moteur de mesure selon la revendication 8, **caractérisé en ce que** l'évidement (22) est formé par au moins deux alésages borgnes se chevauchant dans la direction radiale de l'élément annulaire (4).

10. Moteur de mesure selon l'une des revendications 1 à 9, **caractérisé en ce que** le trajet de fuite (21) tourne conjointement avec l'élément en étoile (3).

11. Unité de direction hydraulique (1) comprenant un moteur de mesure (2) selon l'une des revendications 1 à 10.

12. Unité de direction hydraulique (1) selon la revendication 11, **caractérisée en ce qu'**elle comprend une soupape de direction, un agencement d'orifices d'alimentation relié à la soupape de direction et un orifice de travail ayant un premier orifice de travail relié à la soupape de direction au moyen d'une première conduite de travail et un second orifice de travail relié à la soupape de direction au moyen d'une seconde conduite de travail, où le moteur de mesure est agencé dans l'une des conduites de travail.
